# EUROPEAN PATENT APPLICATION

(11) **EP 4 629 390 A1**
(43) Date of publication of application: **08.10.2025**
(21) Application number: 24909199.2
(22) Date of filing: 22.03.2024
(51) Int. Cl.: H01M 10/0569, H01M 10/0525, H01M 10/42

(54) **NON-AQUEOUS ORGANIC HIGH-VOLTAGE ELECTROLYTE AND LITHIUM-ION BATTERY COMPRISING SAME**

(30) Priority: 01.02.2024 CN 202410144106
(71) Applicant: Suzhou Institute of Nano-tech and Nano-bionics (SINANO) Chinese Academy of Sciences, Suzhou, Jiangsu 215123 (CN)
(72) Inventor: YANG, Bingxiao, Suzhou, Jiangsu 215123 (CN); SHEN, Yanbin, Suzhou, Jiangsu 215123 (CN); CHEN, Liwei, Suzhou, Jiangsu 215123 (CN)
(74) Representative: Ipsilon
(86) International application number: PCT/CN2024/083186
(87) International publication number: WO 2025/161107

(57) **Abstract**

Provided are a non-aqueous organic high-voltage electrolyte and a lithium-ion battery including the same. The non-aqueous organic high-voltage electrolyte includes a lithium salt and a non-aqueous organic solvent; the non-aqueous organic solvent includes a sulfolane derivative and a diluent, and the sulfolane derivative has a structure shown in Formula 1. The electrolyte of the present application has high-voltage resistance, resulting in excellent high-voltage cycling performance for the lithium-ion battery using the electrolyte, and can be compatible with all currently-known high-voltage positive electrode active materials, and has flame-retardant property, ensuring stable cycling of charging and discharging at high voltages and also preventing potential combustion risks of the electrolyte at the same time, which is greatly superior to current EC-based high-voltage electrolytes.

## Description

### TECHNICAL FIELD

The present application relates to the technical field of lithium-ion batteries, such as a non-aqueous organic high-voltage electrolyte and a lithium-ion battery including the same.

### BACKGROUND

Since the advent of commercially available lithium-ion batteries in the 1990s, rechargeable batteries have become increasingly important with the growing demand for high-performance energy storage devices in portable electronic devices and electric vehicles. However, lithium-ion batteries based on conventional technologies are approaching the limits of their energy density and are increasingly fail to meet the growing demand for energy storage. Therefore, continuous improvement on the energy density of lithium-ion batteries is a common pursuit in various fields.

Currently, the energy density of lithium-ion batteries is improved mainly through the following two ways:
1. select positive electrode and negative electrode active materials with high specific capacity and high compact density; and
2. increase the operating voltage of lithium-ion batteries.

Many researchers have been focusing on the development of positive electrode and negative electrode active materials with higher specific capacity, or positive electrode active materials with higher plateau voltage; in contrast, electrolytes have received less attention. Currently, researchers have developed a variety of high-voltage positive electrode active materials. However, the conventional commercial electrolytes are mainly carbonate-based electrolytes based on ethylene carbonate (EC), and such electrolytes easily undergo oxidative decomposition side reactions with the surface of positive electrode materials during charging and discharging processes under high voltages, which not only affects the performance of the high-voltage positive electrode active materials, but also leads to rapid deterioration in the cycling performance of the battery and the battery will be swollen severely, thus leading to the decrease in the overall performance of the battery, and greatly limiting the application of high-voltage lithium-ion batteries. Therefore, developing a new electrolyte matching with high-voltage positive electrode materials is particularly important.

At present, methods used to improve the swelling and cycling performance of lithium-ion batteries under high voltage mainly involve adding a high-voltage functional additive. For example, CN105449277A discloses an electrolyte added with a fluorinated sulfite compound, which can satisfy the cyclic use of lithium-ion batteries under high voltage conditions and prolong the service life of lithium-ion batteries. CN107528088A discloses a positive electrode film-forming additive for a high-voltage electrolyte, which is composed of tris (hexafluoroisopropyl)phosphate and a nitrile additive, and the high-voltage electrolyte provided is suitable for a charging voltage of 4.5-5.0 V. However, these high-voltage functional additives acting on the positive electrode side or negative electrode side account for a relatively small proportion of the EC-based carbonate electrolyte, which fails to change the basic fact that the electrolyte still belongs to the EC-based electrolyte; thus the actual improvement effect of the additives on the high-voltage stable cycling performance of batteries has yet to be determined.

**In** contrast, the development of a high-voltage electrolyte that does not rely on high-voltage functional additives and is independent of the EC system will have a far-reaching impact on the field of electrolyte research, and will have practical application value.

### SUMMARY

The following is a brief summary of subject matter that is described in details herein. This summary is not intended to be limiting as to the scope of the claims.

The present application provides a non-aqueous organic high-voltage electrolyte and a lithium-ion battery including the same.

**In** an aspect, the present application provides a non-aqueous organic high-voltage electrolyte, which includes a lithium salt and a non-aqueous organic solvent; the non-aqueous organic solvent includes a sulfolane derivative and a diluent. The sulfolane derivative has a structure shown in Formula 1: 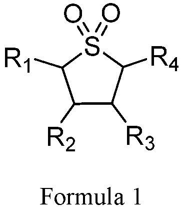 wherein R₁, R₂, R₃, and R₄ are each independently selected from any one or a combination of at least two of a hydroxyl group, a nitro group, a cyano group, a carboxyl group, an amino group, an alkyl group, a silyl group, a silyloxy group, hydrogen, fluorine, chlorine, bromine, and iodine; and R₁, R₂, R₃, and R₄ are not simultaneously hydrogen.

The sulfolane derivative selected in the present application has a high dielectric constant and excellent high-voltage resistance, and the electrolyte prepared from the sulfolane derivative together with a lithium salt and a carbonate diluent is capable of stable cycling in a high voltage interval of 2.8-5.0 V.

In the present application, a sulfolane derivative is used as a non-aqueous organic solvent component to endow the electrolyte with high-voltage resistance, resulting in excellent high-voltage (4.5 V or more) cycling performance for the lithium-ion battery using the electrolyte, and can be compatible with all currently-known high-voltage positive electrode active materials, and has flame-retardant property, ensuring stable cycling of charging and discharging at high voltages and also preventing potential combustion risks of the electrolyte at the same time, which is greatly superior to current EC-based high-voltage electrolytes.

In one embodiment, at least one of R₂ and R₃ is selected from a nitro group.

In one embodiment, at least one of R₂ and R₃ is selected from fluorine.

In one embodiment, R₂ and R₃ are fluorine, and R₁ and R₂ are hydrogen.

In one embodiment, the diluent is any one or a combination of at least two of vinyl carbonate, propylene carbonate, butylene carbonate, dimethyl carbonate, methyl ethyl carbonate, propyl ether, butyl ether, ethyl acetate, methyl propionate, ethyl propionate, butyl propionate, ethyl butyrate, ethylene fluorocarbonate, methyl ethyl fluorocarbonate, dimethyl fluorocarbonate, diethyl fluorocarbonate, and hydrofluoroether.

In one embodiment, the diluent is any one or a combination of at least two of dimethyl carbonate, methyl ethyl carbonate and hydrofluoroether.

In one embodiment, the lithium salt is any one or a combination of at least two of lithium bis(fluorosulfonyl)imide (LiFSI), lithium bis(trifluoromethane)sulfonimide (LiTFSI), lithium hexafluorophosphate (LiPF₆), lithium perchlorate (LiClO₄), lithium tetrafluoroborate (LiBF₄), lithium bis(oxalato)borate (LiBOB), lithium hexafluoroarsenate (LiAsF₆), lithium difluoro(oxalato)borate (LiDFOB), lithium difluorophosphate (LiPF₂O₂), or lithium 4,5-dicyano-2-(trifluoromethyl)imidazol-1-ide (LiDTI).

In one embodiment, the lithium salt is any one or a combination of at least two of lithium hexafluorophosphate (LiPF₆), lithium bis(fluorosulfonyl)imide (LiFSI) and lithium difluoro(oxalato)borate (LiDFOB).

In one embodiment, a molar concentration of the lithium salt in the non-aqueous organic high-voltage electrolyte is 0.05-25 mol/L, for example, 0.05 mol/L, 0.08 mol/L, 0.1 mol/L, 0.5 mol/L, 0.8 mol/L, 1 mol/L, 3 mol/L, 5 mol/L, 8 mol/L, 10 mol/L, 12 mol/L, 15 mol/L, 18 mol/L, 20 mol/L, 22 mol/L or 25 mol/L; optionally, 0.8-1.2 mol/L; further optionally, 1.2 mol/L.

In one embodiment, the sulfolane derivative in the non-aqueous organic solvent has a mass ratio of 0.2%-75%, for example, 0.2%, 0.5%, 0.8%, 1%, 3%, 5%, 8%, 10%, 13%, 15%, 18%, 20%, 23%, 25%, 28%, 30%, 35%, 38%, 40%, 43%, 45%, 48%, 50%, 55%, 58%, 60%, 65%, 68%, 70%, 73% or 75%; optionally, 5%-50%; further optionally, 30%-50%.

In one embodiment, the diluent in the non-aqueous organic solvent has a mass ratio of 25%-99.8%, for example, 25%, 28%, 30%, 35%, 38%, 40%, 45%, 48%, 50%, 55%, 58%, 60%, 63%, 65%, 68%, 70%, 75%, 78%, 80%, 83%, 85%, 88%, 90%, 93%, 95%, 98%, or 99.8%; optionally, 50%-92%.

In another aspect, the present application provides a lithium-ion battery, including a positive electrode plate, a negative electrode plate, a separator, and the aqueous organic high-voltage electrolyte as described above.

In one embodiment, the active substance of the positive electrode plate contains any one or a combination of at least two elements of lithium, iron, cobalt, nickel, manganese, aluminum and phosphorus;
in one embodiment, the active substance of the positive electrode plate undergoes doping or coating with any one or at least two elements of aluminum, magnesium, zirconium, titanium, scandium, lanthanum, nickel, manganese, yttrium and strontium.

Further optionally, the positive electrode plate undergoes doping or coating with any one or at least two of lithium iron phosphate, lithium cobalt oxide, lithium manganese oxide, a nickel-cobalt-manganese ternary electrode material, a nickel-cobalt-aluminum ternary electrode material, and a lithium-rich manganese-based material.

Further, the separator is a thin membrane having a porous structure which blocks electron transport and facilitates lithium-ion transport.

Further, the active substance of the negative electrode plate is any one or a combination of at least two of a carbon-based material, a silicon-based material, a boron-based material, lithium metal, bismuth metal, a nitride, a magnesium-based alloy, a transition metal oxide, and a phosphide.

On the basis of common knowledge in the art, the above optional conditions can be freely combined without exceeding the scope of protection of this application.

In the present application, a method for preparing the lithium-ion battery includes the following steps:
the sulfone derivative and the diluent are first prepared into a homogeneous solution according to the mass ratio described in the claim, and then the lithium salt is dissolved to reach a corresponding concentration. After that, the non-aqueous organic high-voltage electrolyte prepared in the present application is packed between the positive electrode plate and the negative electrode plate having the separator to obtain the lithium-ion battery.

Compared to the prior art, the present application has the following beneficial effects.

(1) Different from the conventional method of adding high-voltage functional additives to EC-based electrolytes, a novel high-voltage electrolyte based on sulfolane derivative is directly proposed in the present application. (2) The high-voltage electrolyte designed in the present application has excellent high-voltage (>4.5 V) cycling performance and is compatible with all currently-known high-voltage positive electrode active materials. (3) The high-voltage electrolyte designed in the present application has flame-retardant performance, ensuring stable cycling of charging and discharging at high voltages and also preventing the potential risks of combustion of the electrolyte at the same time, which is greatly superior to the current EC-based high-voltage electrolyte. (4) The high-voltage electrolyte designed in the present application breaks down the conventional view that sulfone compounds cannot be used as the main solvent of organic electrolyte, and will provide great assistance for the further development of high-voltage electrolytes.

Other aspects will be appreciated upon reading and understanding the detailed description.

### DETAILED DESCRIPTION

The technical solutions of the present application are further described below via specific embodiments. It should be clear to those skilled in the art that the examples are merely used for a better understanding of the present application and should not be regarded as a specific limitation to the present application.

### Example 1

### Preparation of electrolyte 1 and experimental battery 1

Preparation of electrolyte 1: in a glove box filled with argon (moisture < 0.1 ppm, oxygen < 0.1 ppm), 3-nitrosulfolane (Formula 2) and dimethyl carbonate were dissolved and mixed evenly according to a mass ratio of 2:3, and then lithium hexafluorophosphate was slowly dissolved to 1 mol/L, and stirred evenly to give a high-voltage electrolyte.

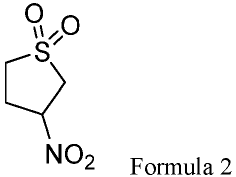

(2) Preparation of positive electrode material: NCM111, carbon black, PVDF (binder) were mixed according to a weight ratio of 93:5:2, N-methylpyrrolidone was added and mixed evenly to form a slurry, and then the slurry was coated on an aluminum foil with a thickness of 12 µm, dried, and rolled to obtain the positive electrode material.

(3) Preparation of negative electrode material: artificial graphite, acetylene black and SBR (binder) were mixed according to a weight ratio of 85:10:5, deionized water was added, and then the slurry was coated on a copper foil with a thickness of 8 µm, dried, and rolled to obtain the negative electrode material.

(4) Preparation of lithium-ion battery 1: the positive electrode plate, a polyolefin separator and the negative electrode plate were stacked in sequence under a dry environment with dew point controlled to be -50°C or lower, wherein the separator should completely isolate the positive electrode plate from the negative electrode plate, and the positive electrode was completely wrapped by the negative electrode; a cell was prepared through lamination, and then encapsulated in a fixed-size aluminum-plastic film with an adhesive tab to forming a soft pack battery to be filled with electrolyte, the electrolyte prepared in step (1) was injected into the soft pack battery, and then sealing, formation, aging, and second sealing and grading were performed to obtain the experimental battery 1 for testing.

### Example 2

### Preparation of electrolyte 2 and experimental battery 2

The only difference from Example 1 is that: during the preparation of electrolyte 2, 3-cyano-4-nitrosulfolane (Formula 3) and methyl ethyl carbonate were dissolved and mixed evenly according to a mass ratio of 3:7, and then lithium bis(fluorosulfonyl)imide was added to 1 mol/L.

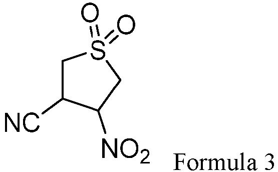

### Example 3

### Preparation of electrolyte 3 and experimental battery 3

The only difference from Example 1 is that: during the preparation of electrolyte 3, 3,4-dinitrosulfolane (Formula 4) and dimethyl carbonate were dissolved and mixed evenly according to a mass ratio of 1:4, and then lithium hexafluorophosphate was dissolved to 0.8 mol/L.

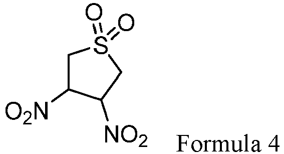

Simultaneously, lithium metal was used as the negative electrode.

### Example 4

### Preparation of electrolyte 4 and experimental battery 4

The only difference from Example 1 is that: during the preparation of electrolyte 4, 3-fluoro-4-fluorosulfolane (Formula 5) and ethyl methyl carbonate were dissolved and mixed evenly according to a mass ratio of 3:7, and then lithium bis(fluorosulfonyl)imide was added to 1 mol/L.

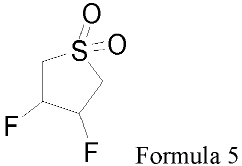

Simultaneously, lithium metal was used as the negative electrode.

### Example 5

The only difference from Example 1 is that: during the preparation of electrolyte 5, 3-fluorosulfolane (Formula 6) and ethyl methyl carbonate were dissolved and mixed evenly according to a mass ratio of 5:5, and then lithium hexafluorophosphate was added to 1 mol/L.

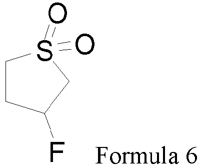

Simultaneously, lithium metal was used as the negative electrode.

### Example 6

The only difference from Example 1 is that: during the preparation of electrolyte 5, 2-fluorosulfolane (Formula 7) and ethyl methyl carbonate were dissolved and mixed evenly according to a mass ratio of 3:7, and then lithium hexafluorophosphate was added to 1 mol/L.

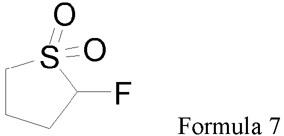

### Comparative Example 1

The only difference from Example 1 is that: the electrolyte was directly a commercially available EC-based electrolyte with a mass ratio of vinyl carbonate to dimethyl carbonate of 3:7, and a molar concentration of lithium hexafluorophosphate of 1 mol/L.

### Comparative Example 2

The only difference from Example 1 is that: during the preparation of the electrolyte, commercially available sulfolane without substitution was used and replaced 3-nitrosulfolane of Example 1.

### Comparative Example 3

The only difference from Example 1 is that: the 3-nitrosulfolane used in Example 1 was replaced with 3-methacryloxysulfolane.

### Comparative Example 4

The only difference from Example 1 is that: the 3-nitrosulfolane used in Example 1 was replaced with 3-ethoxysulfolane.

The performance of the electrolytes and batteries prepared in Examples 1-6 and Comparative Examples 1-4 of the present application were tested. The experimental batteries were tested by charge/discharge cycling at 25°C:
The experimental batteries of Examples 1-6 and Comparative Examples 1-4 after graded were placed in an incubator at 25°C and connected to a charge/discharge tester, and were first charged to 4.8 V at 0.5 C by constant current and constant voltage with a cut-off current set to 0.05 C; after allowed to stand for 5 min, the batteries were discharged to 2.8 V at 0.5 C by constant current, and cyclic charging/discharging test was carried out in such way. The discharge capacity of each cycle was recorded, and the capacity retention rates of the cells were calculated for cycle 200, cycle 400, and cycle 800, respectively, in which the capacity retention rate of the lithium-ion cell for cycle N (%) = discharge capacity of cycle N / discharge capacity of the first cycle × 100%, and the test results are shown in Table 1.

**Tale 1 Cycling performance parameters of each battery group**

| Battery No. | Capacity retention rate at 25°C (%) | | |
|---|---|---|---|
| | cycle 200 | cycle 400 | cycle 800 |
| Example 1 | 96.7 | 94.3 | 91.6 |
| Example 2 | 95.4 | 93.1 | 90.3 |
| Example 3 | 94.5 | 89.7 | 86.1 |
| Example 4 | 99.2 | 97.4 | 95.1 |
| Example 5 | 98.2 | 95.7 | 93.2 |
| Example 6 | 95.2 | 93.7 | 91.5 |
| Comparative Example 1 | 78.5 | 65.7 | 54.3 |
| Comparative Example 2 | 83.5 | 74.3 | 63.0 |
| Comparative Example 3 | 73.2 | 67.4 | 61.0 |
| Comparative Example 4 | 70.2 | 65.3 | 57.3 |

According to cycling performance at room temperature shown in Table 1, the sulfolane-derived electrolyte described in the present application has superior cycling stability and capacity retention rate than conventional EC-based electrolytes and unsubstituted sulfolane electrolyte, for both lithium metal negative electrode and graphite negative electrode.

The applicant declares that the present application illustrates the non-aqueous organic high-voltage electrolyte and the lithium-ion battery including the same of the present application by the above embodiments, but the present application is not limited to the above embodiments, that is, the present application does not necessarily rely on the above embodiments to be implemented. Those skilled in the art should understand that any improvements of the present application, the equivalent substitution of each raw material for products, the addition of auxiliary ingredients, and the selection of specific methods shall fall within the protection scope and disclosure scope of the present application.

## Claims

1. A non-aqueous organic high-voltage electrolyte, which comprises a lithium salt and a non-aqueous organic solvent; the non-aqueous organic solvent comprises a sulfolane derivative and a diluent, and the sulfolane derivative has a structure shown in Formula 1: 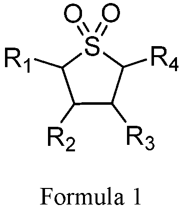 wherein R₁, R₂, R₃, and R₄ are each independently selected from any one or a combination of at least two of a hydroxyl group, a nitro group, a cyano group, a carboxyl group, an amino group, an alkyl group, a silyl group, a silyloxy group, hydrogen, fluorine, chlorine, bromine, and iodine; and R₁, R₂, R₃, and R₄ are not simultaneously hydrogen.

2. The non-aqueous organic high-voltage electrolyte according to claim 1, wherein at least one of R₂ and R₃ is selected from a nitro group.

3. The non-aqueous organic high-voltage electrolyte according to claim 1 or 2, wherein at least one of R₂ and R₃ is selected from fluorine.

4. The non-aqueous organic high-voltage electrolyte according to claim 3, wherein R₂ and R₃ are fluorine, and R₁ and R₂ are hydrogen.

5. The non-aqueous organic high-voltage electrolyte according to any one of claims 1-4, wherein the diluent is any one or a combination of at least two of vinyl carbonate, propylene carbonate, butylene carbonate, dimethyl carbonate, methyl ethyl carbonate, propyl ether, butyl ether, ethyl acetate, methyl propionate, ethyl propionate, butyl propionate, ethyl butyrate, ethylene fluorocarbonate, methyl ethyl fluorocarbonate, dimethyl fluorocarbonate, diethyl fluorocarbonate, and hydrofluoroether.

6. The non-aqueous organic high-voltage electrolyte according to any one of claims 1-5, wherein the diluent is any one or a combination of at least two of dimethyl carbonate, methyl ethyl carbonate and hydrofluoroether.

7. The non-aqueous organic high-voltage electrolyte according to any one of claims 1-6, wherein the lithium salt is any one or a combination of at least two of lithium bis(fluorosulfonyl)imide, lithium bis(trifluoromethane)sulfonimide, lithium hexafluorophosphate, lithium perchlorate, lithium tetrafluoroborate, lithium bis(oxalato)borate, lithium hexafluoroarsenate, lithium difluoro(oxalato)borate, lithium difluorophosphate, or lithium 4,5-dicyano-2-(trifluoromethyl)imidazol-1-ide.

8. The non-aqueous organic high-voltage electrolyte according to any one of claims 1-7, wherein the lithium salt is any one or a combination of at least two of lithium hexafluorophosphate, lithium bis(fluorosulfonyl)imide and lithium difluoro(oxalato)borate.

9. The non-aqueous organic high-voltage electrolyte according to any one of claims 1-8, wherein a molar concentration of the lithium salt in the non-aqueous organic high-voltage electrolyte is 0.05-25 mol/L, further optionally 1.2 mol/L.

10. The non-aqueous organic high-voltage electrolyte according to any one of claims 1-9, wherein the sulfolane derivative in the non-aqueous organic solvent has a mass ratio of 0.2%-75%, optionally 5%-50%, further optionally 30%-50%.

11. The non-aqueous organic high-voltage electrolyte according to any one of claims 1-10, wherein the diluent in the non-aqueous organic solvent has a mass ratio of 25%-99.8%, optionally 50%-92%.

12. A lithium-ion battery, which comprises a positive electrode plate, a negative electrode plate, a separator, and the aqueous organic high-voltage electrolyte according to any one of claims 1-11.
